# EUROPEAN PATENT SPECIFICATION

(11) **EP 3 978 592 B1**
(45) Date of publication and mention of the grant of the patent: **16.09.2026**
(21) Application number: 20815098.7
(22) Date of filing: 28.05.2020
(51) Int. Cl.: C12G 3/04, A23B 7/00, C12G 3/06, C12H 1/22, B65D 55/16, B65D 41/04, B65D 50/04

(54) **PREPARATION FOR PREPARING SANGRIAS OR OTHER FRUIT BEVERAGES**
ZUBEREITUNG ZUR HERSTELLUNG VON SANGRIA ODER ANDEREN FRUCHTGETRÄNKEN
PRÉPARATION POUR L'ÉLABORATION DE SANGRIAS OU D'AUTRES BOISSONS À BASE DE FRUITS

(30) Priority: 30.05.2019 ES 201930907 U
(43) Date of publication of application: 06.04.2022
(73) Proprietor: Mejias Garcia, Juan Luis, 41927 Sevilla (ES)
(72) Inventor: Mejias Garcia, Juan Luis, 41927 Sevilla (ES)
(74) Representative: Munoz Garcia, Antonio
(86) International application number: PCT/ES2020/070352
(87) International publication number: WO 2020/240066

(56) References cited:
- CN-A- 107 019 035
- ES-A1- 2 180 435
- ES-B1- 2 180 435
- JENNIFER: "National brandied fruit day - brandy-soaked fruit", 20 October 2014 (2014-10-20), XP002809668, Retrieved from the Internet <URL:https://thefoodiepatootie.com/national-brandied-fruit-day/> [retrieved on 20230703]
- GUYMON J F ET AL: "STUDIES W I T H BRANDY. I. p H 1", 28 November 1942 (1942-11-28), pages 1 - 7, XP093060235, Retrieved from the Internet <URL:https://www.stilldragon.org/uploads/FileUpload/f7/0b7d0f36b6145a78cad0885db76113.pdf> [retrieved on 20230703]
- SAMBORSKA KINGA ET AL: "The effect of adding berry fruit juice concentrates and by-product extract to sugar solution on osmotic dehydration and sensory properties of apples", JOURNAL OF FOOD SCIENCE AND TECHNOLOGY, SPRINGER (INDIA) PRIVATE LTD, INDIA, vol. 56, no. 4, 4 March 2019 (2019-03-04), pages 1927 - 1938, XP036747474, ISSN: 0022-1155, [retrieved on 20190304], DOI: 10.1007/S13197-019-03658-0
- SHARIF NILOUFAR ET AL: "Concentrated fruit juice as an osmotic solution in production of candied apple", AGRO FOOD INDUSTRY HI TECH, 15 September 2013 (2013-09-15), pages 1 - 5, XP093130399, Retrieved from the Internet <URL:https://www.researchgate.net/profile/Niloufar-Sharif/publication/287277390_Concentrated_fruit_juice_as_an_osmotic_solution_in_production_of_candied_apple/links/5c6bbea5a6fdcc404ebaf35c/Concentrated-fruit-juice-as-an-osmotic-solution-in-production-of-candied-apple.pdf> [retrieved on 20240212]
- ANONYMOUS: "Nuestra Destilería: licores y aguardientes naturales del Valle del Jerte", VALLE DEL JERTE, ES, pages 1 - 5, XP009531903, Retrieved from the Internet <URL:https://web.archive.org/web/20171124191219/http://www.picotasjerte.es/nuestra-destileria-no-te-la-puedes-perder/> [retrieved on 20200831]
- "Cerezas de el Bierzo en Aguardiente", LATIENDAONLINE DE LEON, pages 1 - 1, XP009531901, Retrieved from the Internet <URL:https://web.archive.org/web/20160505180556/https://www.latiendaonlinedeleon.com/es/1146-comprar-cerezas-de-el-bierzo-en-aguardiente-online-de-leon.html> [retrieved on 20200831]

## Description

### OBJECT OF THE INVENTION

As expressed in the title of the present specification, the invention relates to a preparation for the elaboration of sangrias or other beverages incorporating fruit, providing the intended function thereof with advantages and features that are described in detail below and constitute an improvement in the current state of the art.

More specifically, the object of the invention focuses on a set of ingredients comprising a plurality of fruits and/or fruit pieces steeped in a preservative liquid and incorporated in an airtight container suitable for sale, said ingredients forming a product the purpose of which is to allow the instantaneous preparation of beverages such as sangria, or other beverages such as punch or *queimada* that include fruit portions, by incorporating same in wines and/or other alcoholic or non-alcoholic beverages, avoiding conventional preparations that require a prolonged steeping time, as well as resolving the problems and drawbacks of industrial preparations, given that this product does not contain preservatives and maintains the quality and organoleptic characteristics of the fresh fruit in a stable manner at room temperature, primarily as a result of the specific particularities of the mentioned preservative liquid, all this making it easier to conserve and distribute the product, being essentially intended for use in the field of catering for the preparation of beverages and cocktails, as well as in a domestic setting.

### FIELD OF APPLICATION OF THE INVENTION

The field of application of the present invention is comprised within the sector of the food industry, focusing particularly on the field of packaged products prepared for the elaboration of beverages, and more specifically beverages containing fruit pieces such as sangria, punch, *queimada,* and the like.

### BACKGROUND OF THE INVENTION

As is known, sangria is a wine punch consisting typically of red wine, peeled and cut fruit, sugar or honey, to which a little bit of brandy or another liquor is added. The ingredients of sangria vary greatly, particularly in terms of the fruit, liquors, and the presence or absence of a carbonated beverage such as lemon soda, soda water, etc. Sangria is sometimes prepared with white wine instead of red wine, in which case it is called white or clear sangria, and it is also prepared with cava.

Preparation of a typical recipe consists of putting wine in a large jar, adding sugar or honey, and mixing them. Fresh fruit cut into small pieces and brandy are added to this beverage and it is kept at a very low temperature for several hours until it is ready to be served. Ice and pop (soda) are added by gentle stirring before serving.

To successfully make sangria, the most important thing is to allow the flavor of the fruit to mix with the other ingredients (steeping) which, logically, is the part of the preparation that usually takes the longest time. The reality is that neither the hospitality sector nor the end consumer has enough time to perform the preparation of sangria which may take several hours and require many ingredients that they do not want to buy, cut, steep, etc. However, tossing the fruit in right before drinking the sangria or having the fruit steeped in the sangria for a few hours is not the same in terms of the appearance and quality of the result.

There are industrially elaborated sangrias the manufacturing process of which consists basically of adding sugar, fruit aromas, and spices such as cinnamon to wine, and subjecting same to thermal treatment and carbonation.

The problem is that these industrial sangrias are very different from conventionally prepared sangrias which the end consumer wants in their home or consumes in restaurants, because they contain neither natural fruit nor brandy, and the wine does not maintain its initial sensory characteristics either, in view of the addition of a mixture of sucrose, water, soda, etc., and in many cases thermal treatment. This is why such product is not widely accepted, particularly in the hospitality sector in which sangrias are elaborated in the traditional way.

Industrial sangria product having pieces of natural fruit incorporated therein cannot be found on the market today because the manufacturing process causes its deterioration with the loss of all organoleptic properties if it is incorporated in the industrial process.

Therefore, the objective of the present invention is to introduce on the market a product allowing said elaboration of sangria or of another beverage having similar characteristics such as punch or *queimada* that also have cut fruit, for obtaining a product with the same organoleptic characteristics as a product prepared in a traditional and conventional manner, but without having to fulfill the wait time for steeping the fruit, and therefore for enabling the instant preparation thereof.

Moreover, and as a reference to the current state of the art, it should be pointed out that the applicant at least is unaware of the existence of any other similar preparation or invention having features that are identical or similar to those of the product herein claimed.

In said sense, it should be pointed out that although various documents and patents relating to products from the same field of application are known, none of them describes a preparation like the one herein proposed and, as the closest example, patent ES2180435A1 relating to the preparation of a frozen and crystallized fruit base for the elaboration of conventional sangria is known, but it greatly differs from the object herein proposed as it describes a method for cutting and peeling fruit to subsequently proceed to the crystallization, and finally freezing, phase, with said fruit being added to wine during the elaboration of sangria, but it does not include any preservative steeping liquid.

Also, per the Jenniver document: "National frandied fruit day - grandy-soakeg fruit", published at URL: https:// thefoodiepatootie.com on 2023-07-03, a preparation with fruits soaked in brandy is described that includes placing fruits in a jar, specifically strawberries and cranberries, in a jar and pour brandy over the top, however, it is not intended for the preparation of sangria and it does not contemplate that the liquid be added hot or that it includes the use of concentrated juices.

Document CN107019035A discloses a method of preserving fresh fruits and vegetables that aims to solve the problem of the destruction of vitamins in the storage of fruits and vegetables such as canned jams. The anaerobic, acid resistance and anti-corrosion food acid characteristics of lactic acid bacteria, long-term storage of foods such as fruits and vegetables in preserves or jams made for the purpose of preserving complete nutritional matter. Although it does not disclose a preparation for sangria nor does it include a government liquid, nor does it include a hot liquid or concentrated juices.

And, per the Guymon JF et AL document: "Studies, with brandy I. pH1, the conservation properties of brandy are disclosed, among others.

In addition, by document "The effect of adding berry fruit juice concentrates and by-product extract to sugar solution on osmotic dehydration and sensory properties of apples" SAMBORSKA KINGA ET AL, Journal of Food Science and Technology, Springer (India) private Ltd, India [Online] vol. 56, no 4,4 March 2019(2019-03-04), pages 1927-1938, XP036747474, ISSN: 0022-1155, DOI: 10.1007/S13197-019-03658-0, an article is published that, although it shows fruit juice solutions added to fruit pieces that cause minor changes in water content and solids gain that may represent turgor improvement in the treated fruit, as well as not using juice concentrates, and that it uses berry juice, is also not applicable for a fruit beverage, but is intended for use in making candied fruit to be used either for direct consumption or for use in cakes or other, but not for making sangria or any other similar beverage.

Also, by document "Concentrated fruit juice as an osmotic solution in production of candied Apple" Sharif Niloufar ET AL. Agro Food Industry Hi Tech, 15 September 2013 (2013-09-15), pages 1-5, XP093130399, use of fruit juice concentrate to make candied apple is disclosed. Again, it is a processing of fruit to be consumed independently of the solution or liquid with which it is prepared, unlike the object of the present invention, where both the fruit and the liquid in which it is immersed form part of a whole consisting also of a beverage, not a solid.

### DESCRIPTION OF THE INVENTION

The preparation for the elaboration of sangrias or other beverages incorporating fruit proposed by the invention propone allows achieving the objectives indicated above in a satisfactory manner, with the characterizing details making it possible and distinguishing same being suitably described in the final claims accompanying the present description.

Specifically, as set forth above, the invention proposes a food preparation intended for the field of catering and for domestic consumption the purpose of which is to enable the instantaneous preparation of beverages such as sangria, or other beverages such as punch or *queimada* including steeped fruit portions, which preparation consisting of a product packaged in an airtight manner which is made up of a set of ingredients comprising, among others, at least a plurality of fruits and/or fruit pieces steeped in a covering liquid which acts as a preservative, is ready to be used for preparing said beverages by simply incorporating same in wines and/or other alcoholic or non-alcoholic beverages.

More specifically, the main ingredient of the preparation is peeled and cut fresh fruit in different combinations to which there is added a covering liquid made up mainly of a solution based on concentrated juices and spices to which an alcoholic beverage, preferably brandy, vermouth or grain alcohol, is added.

In turn, the elaboration of the preparation is configured from the washing, cutting, and mixing of any type of fruit, preferably fresh fruit, such as apple, peach, orange, lemon, pear, etc., which is incorporated in the container, preferably consisting of a tub or bag, in a natural state.

Once the mixtures of fruit pieces configuring the base of the product have been dispensed into the container, covering liquid which acts as a preservative, while at the same time being used as an ingredient of the end product, is added. This liquid transfers refreshing aromas and adds the possibility of adding a different alcohol concentration, depending on the type of final beverage for which it is intended.

This covering liquid is a solution comprising, as the fundamental ingredient, concentrated juices, for example clarified concentrated grape must if what is to be prepared is a sangria, at different concentrations (from 40 to 70 Brix) which are mixed with liquors, for example brandy, in the case of sangria, in a variable proportion.

Furthermore, preferably, the covering liquid also incorporates spices, for example cinnamon if the beverage is sangria, and salt, preferably calcium salt.

Additionally, grapefruit or lemon extracts can also be added to the covering liquid.

Once the desired covering liquid is obtained, it is subjected to heating (between 60 and 90°C) and is incorporated hot in the bag or tub that already contains the mixture of fresh fruit. This liquid transfers the required sweetness to the fruit while acting as a preservative at the same time.

Once the container is filled with fruit pieces and covering liquid, the airtight sealing of the container is performed, with said container proceeding subsequently to the labeling and storage stage.

Therefore, the main advantages of the preparation with respect to other similar products existing on the market are as follows:
- It contains peeled and cut fresh fruits, preferably organic fruit.
- The fruit of the preparation stays turgid and fresh for at least 6 months in the absence of cold, and more than one year at 4°C.
- It does not contain wine, allowing the use of wine of desired quality.
- It does not contain added sugar; sweetness is obtained with the concentrated must.
- It uses in the composition thereof mainly ingredients acting as preservatives originating from the wine sector, specifically clarified concentrated grape must and brandy.
- It is stored at room temperature in a stable manner, controlling undesired deterioration, intoxication, and fermentation processes.
- It offers time saving in terms of preparation and steeping for obtaining desired tastes. It is ideal for the hospitality sector since it is extremely easy to prepare.

It is important to highlight that the types of main ingredients used originate from the wine sector, specifically (clarified) concentrated must and brandy, selected taking into account their composition and proportions, which have been calculated and chosen based on solute exchange so that the fruit stays fresh throughout the entire shelf-life of the preparation.

### DESCRIPTION OF THE DRAWINGS

To complement the description that is being made and for the purpose of helping to better understand the features of the invention, a set of drawings is attached to the present specification as an integral part thereof in which the following is depicted in a non-limiting, illustrative manner:
Figures 1 and 2 show respective top perspective views of two examples of the packaging of the preparation object of the invention, in a tub and bag, respectively.
Figure 3 shows a flow chart of the main steps comprised in the elaboration of the preparation.

### PREFERRED EMBODIMENT OF THE INVENTION

As seen in said figures, the preparation (1) in question is a food product which is made up of a set of ingredients incorporated in an airtight container (2) ready for the elaboration of sangrias or other beverages incorporating fruit by means of the incorporation thereof in wines and/or other alcoholic or non-alcoholic beverages, said preparation comprising essentially a plurality of fruits and/or fruit pieces (3) and a covering liquid (4) which acts as a preservative and in which said fruit pieces (3) are submerged such that they, are steeped therein, allowing the distribution and sale thereof in the so-called positive cold and at room temperature without having to incorporate additional chemical preservatives.

More specifically, the fruits and/or fruit pieces (3) are peeled and cut fresh fruits or fruit pieces in variable combinations, such as apple, peach, orange, lemon, pear, or the like, depending on whether it is intended for the preparation of sangria or another different type of beverage, and the covering liquid (4), which is added hot to the fruit or fruit pieces (3) once they are placed in the container (2) prior to closure, is made up mainly of a solution of concentrated juices mixed with a liquor, vermouth, or grain alcohol.

Furthermore, preferably, the covering liquid (4) also incorporates spices and salt, and additionally grapefruit or lemon extracts.

For example, if the beverage to be prepared is sangria, the covering liquid (4) of the preparation (1) is a grape must solution at different concentrations and brandy to which there is added cinnamon stick (5) and calcium salts.

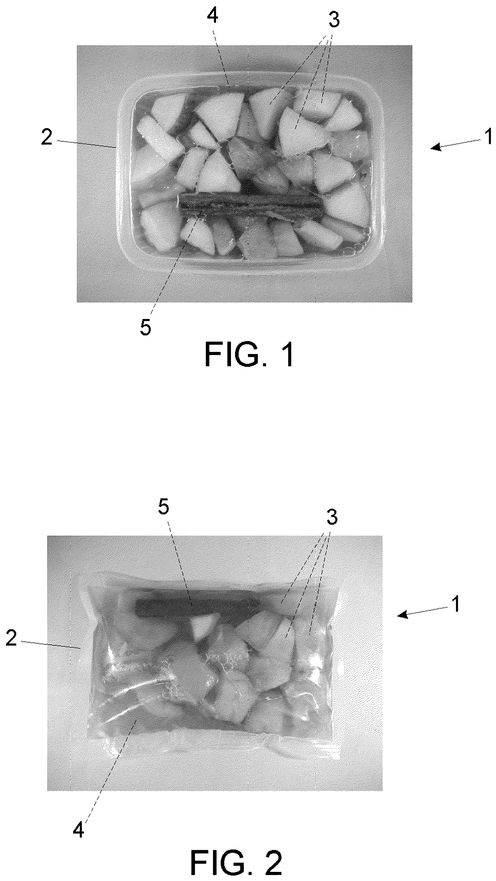

In turn, the container (2) preferably consists of a rigid tub, as shown in Figure 1, or a bag, as shown in the example of Figure 2.

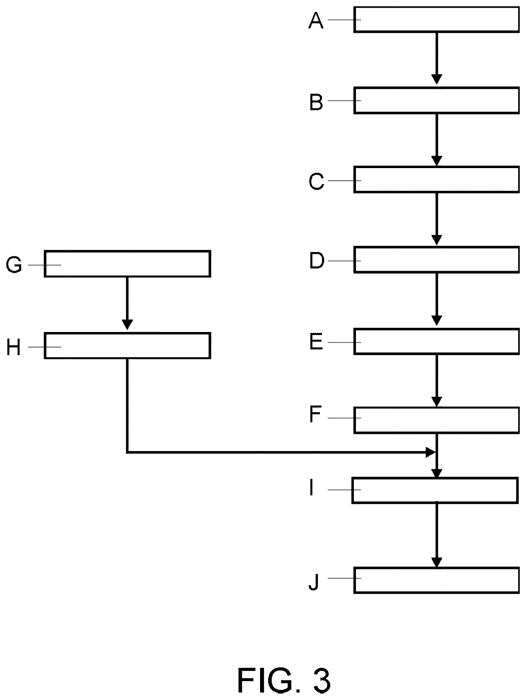

Figure 3 shows the flow chart of the main steps for the elaboration of the preparation (1) object of the invention, which essentially comprise the following:
- Fruit washing step (A). The operation consists of removing dirt that comes with the fruit before it enters the process line, thereby preventing complications derived from surface contamination that the raw material may contain. This washing can be performed with clean tap water or chlorine-treated water. This washing is used to perform surface disinfection on the raw material and to reduce the microbial load. The washing tank can be connected to a chlorine dioxide (ClO₂) installation which dispenses the amount required for the disinfection process. The function of this equipment is to dispense between 0.5 and 3 ppm of ClO₂.
- Selection step (B). Once the surface of the raw material is clean, selection is performed, i.e., separating the material that will indeed be used in the process from the material with a defect.
- Peeling step (C). This operation consists of removing the skin of the fruit where necessary, depending on the specific fruit. It can be performed using physical means such as using knives or similar equipment, also using heat; or by means of chemical methods consisting basically of causing the decomposition of the cell wall of external cells, and removing the skin as a result of the loss of tissue integrity.
- Cutting and pitting step (D). Pitting consists of removing the pit from the different raw materials, i.e., fruits, with a pit. Cutting allows fruit pieces (3) to be obtained for those fruits the size of which requires said cutting and must be performed by means of clean and clear cuts that do not involve, where possible, more than a few layers of cells, i.e., that do not cause massive tissue damage, to prevent the detrimental effects of a change in color and taste. Furthermore, cutting is performed such that it allows obtaining a suitable industrial output. The way to perform cutting which delivers the largest possible amount of usable material is sought at all times. In the preferred embodiment, to prepare sangria, the main fruits are apple, orange, lemon, and peach. Another factor studied in the processing is the morphology of the cut fruit pieces. The dimensions of the pieces in the subsequent steps, and their influence on packaging processes, have been studied for each product.
- Draining and mixing step (F). Excess liquid which may cover the surface of the fruit is removed, and the pieces are mixed depending on the final recipe. The preparation of the invention may comprise different variations of fruit mixtures that will be defined by the season of the year and the type of preparation. Some examples of said mixtures comprise:
   - Mediterranean: orange, lemon, apple, and peach.
   - Tropical: pineapple, mango, persimmon, kiwi, and banana.
   - Berries: strawberries, raspberries, blueberries, blackberries.
- Solid dispensing step (F). The fruits and/or the fruit pieces (3) are dispensed in the tubs or bags constituting the container (2) in a proportion ranging from 45 to 70% of the total volume of the product. This operation can be performed manually or by means of dispensers. The function is to add the desired amounts in the final format of the product.
- Covering liquid (4) dispensing step (I). The covering liquid (4) is dispensed hot at a temperature of between 60 and 90°C on the mixtures of fruits and/or of fruit pieces (3) which are in the tubs or bags constituting the container (2) in a proportion ranging from 30 to 65% of the total volume of the product. Once the covering liquid (4) is heated, it is dispensed to form, together with the fruit (3), the end product such that the fruit (3) is always covered with the liquid, given that this liquid acts as a preservative.
- Airtight packaging step (J). Once the covering liquid (4) and the fruit (3) are dispensed in the container (2), it is sealed in an airtight manner by means of the most suitable system according to the type of container: flow-pack for bags and heat-sealing or thermoforming for tub-type trays, where this container can also be bottles or another type of container.

In the preferred embodiment option, for tub- or bottle-type containers (2), a heat-sealing system by applying vacuum is used, whereby all the fruit is submerged, preventing oxidations and giving the product a better visual appearance. In the case of the bag, a flow-pack liquid-dispensing system causing the fruit to be submerged in the covering liquid at all times is used.

There is a large number of container models, so the selection thereof will depend particularly on economic and marketing criteria. The technical parameters to be controlled are output (cycles/min), types of molds, fill volume, etc.

Lastly, the container (2) with the product is labeled and ready for case packing, storage, and final shipping.

Moreover, it should be pointed out that to perform covering liquid (4) dispensing step (I), a series of preparatory steps for obtaining said covering liquid are first contemplated:
- Covering liquid (4) preparation and mixing step (G). The covering liquid (4) is prepared in one or two mixing tanks. These tanks are stirred. Preferably, two tanks are provided so that the covering liquid can be prepared in one of them while the other one is used to supply the packaging line.

### Covering liquid preparation.

The covering liquid is prepared with the following mixture of ingredients:
Clarified concentrated grape must (30 to 70 °Brix). The main characteristic when choosing the must that will act as a preservative is a selection based on its acidity, choosing those the acidity of which is less than 3. Furthermore, given that the stability of concentrated must is much better at pH equal to or less than 3, improved visual appearance and clarity are observed over time. Preferably, a must having an acidity of 2.58 has been selected, although more generally other concentrated juices with a density and pH always less than 4 can be used.

In the preferred embodiment, the 65 Brix concentrated must is diluted in water to 40°Brix, where the musts can also be musts supplied at this concentration.

There is added to said must a liquor which, as a result of having alcohol (36 to 65°), exhibits a bactericidal effect, which helps to improve the conservation of the product. Preferably, the liquor is *brandy de Jerez* 36° in a proportion of 20% by weight. It should be pointed out that the pH of the brandy is 2.85. Generally, other beverages such as anisette, triple sec, vermouth, etc., could be added.

Mineral salt, preferably calcium salt (calcium chloride or calcium ascorbate) which helps to improve the hardness of the fruit (0 to 4%), preferably, 0.6% calcium chloride, is added to this liquid.

Optionally, spices can be added depending on the preparation. In the case of sangria, there is added cinnamon which, while serving as a preservative, also improves conservation when added in an extract. Other spices can be rosemary, vanilla, etc.

Ultimately, the final pH of the covering liquid (4) is preferably less than 4. In the preferred embodiment, it is below 3 and more specifically the final pH of the different formulations is between 2 and 2.7 of the pH at the end of its shelf-life.

Additionally, concentrated lemon or grapefruit juice can be added to the covering liquid (4) to obtain an ideal conservation pH and at the same time generate a refreshing effect. However, in the preferred embodiment, for the case of a preparation intended for the preparation of sangria, it is not necessary because an ideal pH is obtained with the aforementioned must and brandy, but generally it can be added.
- Covering liquid (4) heating step (H) before dispensing the liquid. The covering liquid (4) is dispensed on the product at a temperature comprised between 60 and 90°C, to that end equipment prepared to that end is used, for example, a pressurized pasteurizer.

In said case, the liquid is heated in a pressurized tank at a temperature of 75°C-80°C for the following purposes:
- To prevent the survival mold and yeast in the concentrated must wich may alter the quality of the finished product, as it allows the fruit to be conserved at room temperature, maintaining microbiological safety.
- To prevent the degradation of the must. The temperature will not exceed 85°C to prevent the degradation of fructose and glucose in the concentrated must.
- To prevent possible losses of alcohol concentration of the brandy; to that end, the liquid is heated at a pressure in a special pasteurizer within a short period of time. Preferably, it is subjected to two bar of pressure and is dispensed before 5 minutes have elapsed since the start of heating. In these conditions, the alcohol concentration of the product is kept constant.

Once the covering liquid is heated, it is dispensed on the cut fruit, producing the following effects:
- Reduction of the enzymatic activity of the fruit to prevent undesirable changes in color and natural flavor.
- Discharge of respiration gases from the fruit, product of the physiological activity of cut fruit. O₂ and CO₂ are released from inside the container.
- Softening of the fruit. The hot liquid causes the fruit to adapt itself to the container, making filling easier. It is important to highlight that, during filling, the fruit must be covered with liquid and there must not be air in the head space.

Finally, it should be highlighted that in the preferred embodiment of the preparation (1), the content of the container (2) in which the preparation is incorporated is suitable for the preparation of one liter of beverage.

Having sufficiently described the nature of the present invention, as well as the manner of putting it into practice, it is not considered necessary to expand on this explanation so that one skilled in the art will understand its scope and the advantages derived from it, hereby stating that within its essential nature, the invention may be carried out to practice in other embodiments which differ in detail from that, indicated by way of example and which will likewise attain the protection that is sought provided that its fundamental principle is not altered, changed, or modified.

## Claims

1. A preparation for the elaboration of sangrias or other beverages incorporating fruit which is made up of a set of ingredients incorporated in an airtight container (2) and ready for the elaboration of sangrias, punch, queimadas, or other beverages with fruit, by means of the incorporation thereof in wines and/or other alcoholic or non-alcoholic beverages, wherein the preparation comprises a plurality of fruits and/or fruit pieces (3) and a covering liquid (4) which acts as a preservative and in which said fruit pieces (3) are submerged such that they are steeped therein, wherein said fruits and/or fruit pieces (3) are fresh fruits or fruit pieces in variable combinations, depending on whether it is intended for the preparation of sangria or another different type of beverage, and the covering liquid (4), which is hot, at a temperature between 60-90°C, when added to the fruit or fruit pieces (3) once they are placed in the container (2) prior to closure, is made up of a solution of concentrated juices mixed with a liquor, vermouth, or grain alcohol; wherein said fruits and/or pieces of fruit (3) are included in a proportion ranging from 45 to 70% of the total volume of the product; wherein said covering liquid (4) is included in a proportion ranging from 30 to 65% of the total volume of the product; and wherein the pH of the covering liquid is less than 4.

2. The preparation for the elaboration of sangrias or other beverages incorporating fruit according to claim 1, wherein the covering liquid (4) also incorporates spices and salt.

3. The preparation for the elaboration of sangrias or other beverages incorporating fruit according to claim 2, wherein the covering liquid (4) also incorporates grapefruit or lemon extracts.

4. The preparation for the elaboration of sangrias or other beverages incorporating fruit according to claims 1 and 2, wherein when the beverage to be prepared is sangria, the covering liquid (4) is a grape must solution at different concentrations, the liquor is brandy, and it incorporates as spices cinnamon stick (5).

5. The preparation for the elaboration of sangrias or other beverages incorporating fruit according to claim 4, wherein the covering liquid (4) incorporates a 40 °Brix concentrated must.

6. The preparation for the elaboration of sangrias or other beverages incorporating fruit according to claim 4 or 5, wherein the covering liquid (4) incorporates liquor with an alcohol content of 36-65% AVB.

7. The preparation for the elaboration of sangrias or other beverages incorporating fruit according to claim 1, wherein the pH of the covering liquid (4) is below 3.

8. The preparation for the elaboration of sangrias or other beverages incorporating fruit according to any of claims 1 to 7, wherein in one embodiment the mixture of fruits and/or fruit pieces (3) comprises: orange, lemon, apple, and peach.

9. The preparation for the elaboration of sangrias or other beverages incorporating fruit according to any of claims 1 to 7, wherein in one embodiment the mixture of fruits and/or fruit pieces (3) comprises: pineapple, mango, persimmon, kiwi, and banana.

10. The preparation for the elaboration of sangrias or other beverages incorporating fruit according to any of claims 1 to 7, wherein in one embodiment the mixture of fruits and/or fruit pieces (3) comprises: strawberries, raspberries, blueberries, blackberries.

11. The preparation for the elaboration of sangrias or other beverages incorporating fruit according to any of claims 1 to 10, wherein the container (2) is a rigid tub.

12. The preparation for the elaboration of sangrias or other beverages incorporating fruit according to any of claims 1 to 10, wherein the container (2) is a bag.

## Patentansprüche

1. Zubereitung zur Herstellung von Sangria oder anderen Getränken, welche Früchte beinhalten, welche aus einem Satz von Zutaten besteht, welche in einem luftdichten Behälter (2) enthalten sind und zur Herstellung von Sangria, Punsch, Queimada oder anderen Fruchtgetränken, mittels der Beimischung derselben in Wein und/oder andere alkoholische oder nicht alkoholische Getränke bereitstehen, wobei die Zubereitung eine Vielzahl von Früchten und/oder Fruchtstücken (3) und eine Aufgußflüssigkeit (4) umfasst, welche als Konservierungsstoff wirkt und in welcher die genannten Fruchtstücke (3) eingetaucht sind, sodass sie darin eingeweicht sind, wobei die genannten Früchte und/oder Fruchtstücke (3) frische Früchte oder Fruchtstücke in variablen Kombinationen sind, je nachdem, ob sie zur Herstellung von Sangria oder einer anderen unterschiedlichen Art von Getränk vorgesehen ist, und die Aufgußflüssigkeit (4), welche heiß ist, bei einer Temperatur zwischen 60-90 °C, wenn sie zur Frucht oder zu den Fruchtstücken (3) hinzugefügt wird, wenn sie einmal im Behälter (2) vor dem Schließen desselben platziert worden sind, aus einer Lösung von Saftkonzentraten gemischt mit einem Likör, Wermut oder Kornalkohol besteht; wobei die genannten Früchte und/oder Fruchtstücke (3) in einem Anteil, welcher von 45 bis 70 % des Gesamtvolumens des Produkts reicht, beinhaltet sind; wobei die genannte Aufgußflüssigkeit (4) in einem Anteil, welcher von 30 bis 65 % des Gesamtvolumens des Produkts reicht, beinhaltet ist; und wobei der pH-Wert der Aufgußflüssigkeit niedriger als 4 ist.

2. Zubereitung zur Herstellung von Sangria oder anderen Getränken, welche Früchte beinhalten, nach Anspruch 1, wobei die Aufgußflüssigkeit (4) auch Gewürze und Salz beinhaltet.

3. Zubereitung zur Herstellung von Sangria oder anderen Getränken, welche Früchte beinhalten, nach Anspruch 2, wobei die Aufgußflüssigkeit (4) auch Pampelmuse- oder Zitronenextrakten beinhaltet.

4. Zubereitung zur Herstellung von Sangria oder anderen Getränken, welche Früchte beinhalten, nach den Ansprüchen 1 und 2, wobei, wenn das herzustellende Getränk Sangria ist, die Aufgußflüssigkeit (4) eine Traubenmost-Lösung mit unterschiedlichen Konzentrationen ist, der Likör Branntwein ist, und sie als Gewürze Zimtstange (5) beinhaltet.

5. Zubereitung zur Herstellung von Sangria oder anderen Getränken, welche Früchte beinhalten, nach Anspruch 4, wobei die Aufgußflüssigkeit (4) einen 40° Brixkonzentrierten Most beinhaltet.

6. Zubereitung zur Herstellung von Sangria oder anderen Getränken, welche Früchte beinhalten, nach Anspruch 4 oder 5, wobei die Aufgußflüssigkeit (4) Likör mit einem Alkoholgehalt von 36-65 Vol.- % beinhaltet.

7. Zubereitung zur Herstellung von Sangria oder anderen Getränken, welche Früchte beinhalten, nach Anspruch 1, wobei der pH-Wert der Aufgußflüssigkeit (4) unter 3 liegt.

8. Zubereitung zur Herstellung von Sangria oder anderen Getränken, welche Früchte beinhalten, nach einem der Ansprüche 1 bis 7, wobei in einer Ausführungsform die Mischung aus Früchten und/oder Fruchtstücken (3) Folgendes umfasst: Apfelsine, Zitrone, Apfel und Pfirsich.

9. Zubereitung zur Herstellung von Sangria oder anderen Getränken, welche Früchte beinhalten, nach einem der Ansprüche 1 bis 7, wobei in einer Ausführungsform die Mischung aus Früchten und/oder Fruchtstücken (3) Folgendes umfasst: Ananas, Mango, Dattelpflaume, Kiwi und Banane.

10. Zubereitung zur Herstellung von Sangria oder anderen Getränken, welche Früchte beinhalten, nach einem der Ansprüche 1 bis 7, wobei in einer Ausführungsform die Mischung aus Früchten und/oder Fruchtstücken (3) Folgendes umfasst: Erdbeeren, Himbeeren, Heidelbeeren, Brombeeren.

11. Zubereitung zur Herstellung von Sangria oder anderen Getränken, welche Früchte beinhalten, nach einem der Ansprüche 1 bis 10, wobei der Behälter (2) ein steifer Kübel ist.

12. Zubereitung zur Herstellung von Sangria oder anderen Getränken, welche Früchte beinhalten, nach einem der Ansprüche 1 bis 10, wobei der Behälter (2) ein Beutel ist.

## Revendications

1. Préparation pour l'élaboration de sangrias ou d'autres boissons à base de fruits qui est constituée d'un ensemble d'ingrédients incorporés dans un récipient (2) hermétique et prêts pour l'élaboration de sangrias, de punchs, de *queimadas* ou d'autres boissons aux fruits, par le biais de leur incorporation dans des vins et/ou d'autres boissons, alcoolisées ou non, dans lesquelles la préparation comprend une pluralité de fruits et/ou de morceaux de fruit (3) et un liquide de couverture (4) dans lequel sont immergés en macération lesdits morceaux de fruit (3) et qui agit en tant que conservateur, dans laquelle lesdits fruits et/ou morceaux de fruit (3) sont des fruits ou des morceaux de fruit frais dans des combinaisons variables, selon qu'elle est destinée à la préparation de sangria ou d'un autre type de boisson différent, et le liquide de couverture (4), qui est chaud, à une température comprise entre 60-90 °C, lorsqu'il est ajouté aux fruits ou aux morceaux de fruit (3) une fois placés dans le récipient (2) avant sa fermeture, est constitué d'une solution de jus concentrés mélangés à une liqueur, un vermouth ou de l'eau-de-vie ; dans laquelle lesdits fruits et/ou morceaux de fruit (3) sont inclus dans une proportion allant de 45 à 70 % du volume total du produit ; dans laquelle ledit liquide de couverture (4) est inclus dans une proportion allant de 30 à 65 % du volume total du produit ; et dans laquelle le pH du liquide de couverture (4) est inférieur à 4.

2. Préparation pour l'élaboration de sangrias ou d'autres boissons à base de fruits, selon la revendication 1, dans laquelle le liquide de couverture (4) incorpore également des épices et du sel.

3. Préparation pour l'élaboration de sangrias ou d'autres boissons à base de fruits, selon la revendication 2, dans laquelle le liquide de couverture (4) incorpore également des extraits de pamplemousse ou de citron.

4. Préparation pour l'élaboration de sangrias ou d'autres boissons à base de fruits, selon les revendications 1 et 2, dans laquelle, lorsque la boisson à préparer est de la sangria, le liquide de couverture (4) est une solution de moût de raisin, à différentes concentrations, la liqueur est du brandy et elle incorpore des bâtons de cannelle (5) en tant qu'épices.

5. Préparation pour l'élaboration de sangrias ou d'autres boissons à base de fruits, selon la revendication 4, dans laquelle le liquide de couverture (4) incorpore du moût concentré à 40°Brix.

6. Préparation pour l'élaboration de sangrias ou d'autres boissons à base de fruits, selon la revendication 4 ou 5, dans laquelle le liquide de couverture (4) incorpore de la liqueur avec une teneur en alcool de 36 à 65 % d'alcool en volume.

7. Préparation pour l'élaboration de sangrias ou d'autres boissons à base de fruits, selon la revendication 1, dans laquelle le pH du liquide de couverture (4) est inférieur à 3.

8. Préparation pour l'élaboration de sangrias ou d'autres boissons à base de fruits, selon l'une quelconque des revendications 1 à 7, dans laquelle, dans un mode de réalisation, le mélange de fruits et/ou de morceaux de fruit (3) comprend : orange, citron, pomme, et pêche.

9. Préparation pour l'élaboration de sangrias ou d'autres boissons à base de fruits, selon l'une quelconque des revendications 1 à 7, dans laquelle, dans un mode de réalisation, le mélange de fruits et/ou de morceaux de fruit (3) comprend : ananas, mangue, kaki, kiwi et banane.

10. Préparation pour l'élaboration de sangrias ou d'autres boissons à base de fruits, selon l'une quelconque des revendications 1 à 7, dans laquelle, dans un mode de réalisation, le mélange de fruits et/ou de morceaux de fruit (3) comprend : fraises, framboises, myrtilles, mûres.

11. Préparation pour l'élaboration de sangrias ou d'autres boissons à base de fruits, selon l'une quelconque des revendications 1 à 10, dans laquelle le récipient (2) est une barquette rigide.

12. Préparation pour l'élaboration de sangrias ou d'autres boissons à base de fruits, selon l'une quelconque des revendications 1 à 10, dans laquelle le récipient (2) est une poche.
